# EUROPÄISCHE PATENTANMELDUNG

(11) **EP 2 058 248 A2**
(43) Veröffentlichungstag der Anmeldung: **13.05.2009**
(21) Anmeldenummer: 08021252.5
(22) Anmeldetag: 26.11.2007
(51) Int. Cl.: B65G 21/04, B65G 39/20

(54) **Förderanlage zum Transport von Gütern**

(30) Priorität: 24.07.2007 AT 11712007
(62) Teilanmeldung aus: 07450209.7
(71) Anmelder: Innova Patent GmbH, 6960 Wolfurt (AT)
(72) Erfinder: Trieb, Herbert, 6911 Lochau (AT)
(74) Vertreter: Hehenberger, Reinhard

(57) **Zusammenfassung**

Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist und wobei das Förderband (1) mit den Tragbalken (2) mittels in diese eingesetzten Schraubbolzen (4) verbunden ist, dadurch gekennzeichnet, dass die Tragbalken (2) an ihrer dem Förderband (1) zugewandten Seite ebenflächig ausgebildet sind.

## Beschreibung

Die gegenständliche Erfindung betrifft eine Förderanlage zum Transport von Gütern mit einem Förderband, welches an den beiden Enden der Anlage über Umlenktrommeln geführt ist und welches an der Unterseite von quer zur Bewegungsrichtung des Förderbandes ausgerichteten und in Bewegungsrichtung des Förderbandes voneinander im Abstand befindlichen Tragbalken befestigt ist, wobei an den beiden seitlichen Enden der Tragbalken jeweils Laufrollen gelagert sind, welche auf zwei längs der Anlage vorgesehenen Paaren von Tragseilen bzw. Tragschienen, die dem vorlaufenden Trum und dem rücklaufenden Trum des Förderbandes zugeordnet sind, abrollen, wobei zumindest bei einem Teil der Tragbalken zwischen der Unterseite der Tragbalken und der Oberseite des Förderbandes eine aus einem elastischen Material bestehende Dichtungsleiste vorgesehen ist, und wobei das Förderband mit den Tragbalken mittels in diese eingesetzte Schraubbolzen verbunden ist.

Bei derartigen Förderanlagen, welche z.B. aus der DE 10348516 A1 bekannt sind, ist das Förderband an der Unterseite der Tragbalken dadurch befestigt, dass über die Länge der Tragbalken mehrere im Abstand voneinander befindliche Schraubbolzen vorgesehen sind, welche die Tragbalken und das Förderband durchsetzen. Weiters sind bei diesen bekannten Förderanlagen zwischen dem Förderband und den Tragbalken aus einem elastischen Material bestehende Dichtungsleisten vorgesehen, durch welche verhindert wird, dass zwischen das Förderband und die Tragbalken Fördergut eintritt.

Bei den bekannten Förderanlagen sind die Tragbalken mit einem kreisförmigen Querschnitt ausgebildet. Da das Förderband ebenflächig ist, bedingt dessen Befestigung an dem mit einer gekrümmten Oberfläche ausgebildeten Tragbalken mittels Schraubbolzen Schwierigkeiten. Der gegenständlichen Erfindung liegt somit die Aufgabe zugrunde, die Tragbalken so auszubilden, dass an diesen eine wesentlich verbesserte Befestigung des Förderbandes ermöglicht wird. Diese Aufgabe wird erfindungsgemäß dadurch gelöst, dass die Tragbalken an ihrer der Oberseite des Förderbandes zugewandten Seite ebenflächig ausgebildet sind.
Insbesondere sind die Tragbalken im Querschnitt sechseckig ausgebildet.

Vorzugsweise ist die Unterseite der Dichtungsleiste mit der Oberseite des Förderbandes durch Klebung verbunden. Nach einer weiteren bevorzugten Ausführungsform ist die Dichtungsleiste an ihrer den Tragbalken zugewandten Seite mit einer mit dieser durch Klebung verbundenen Verstärkungsleiste ausgebildet und ist die Verstärkungsleiste an ihrer den Tragbalken zugewandten Seite gleichfalls ebenflächig ausgebildet. Weiters sind vorzugsweise die Tragbalken an ihrer dem Förderband abgewandten Seite mit Ausnehmungen ausgebildet, in welche die den Schraubbolzen zugeordneten Muttern gegenüber der Oberfläche der Tragbalken versenkt eingesetzt sind. Gemäß einer alternativen Ausführungsform sind in die Tragbalken von der dem Förderband abgewandten Seite her Hutmuttern eingesetzt.

Der Gegenstand der Erfindung ist nachstehend anhand von in den Zeichnungen dargestellten Ausführungsbeispielen näher erläutert. Es zeigen:
- FIG.1: einen Abschnitt einer Transportanlage, in axonometrischer Darstellung;
- FIG.2: einen Abschnitt des Förderbandes der Förderanlage gemäß FIG.1, in axonometrischer Darstellung;
- FIG.3: einen Abschnitt des Förderbandes, in einem Längsschnitt;
- FIG.4: ein erstes Ausführungsbeispiel der Befestigung des Förderbandes an einem Tragbalken, im Querschnitt;
- FIG.5, FIG.5a, FIG.5b: zweite Ausführungsbeispiele der Befestigung des Förderbandes an einem Tragbalken, jeweils in Querschnitten;
- FIG.6, FIG.6a: dritte Ausführungsbeispiele der Befestigung des Förderbandes an einem Tragbalken, jeweils in Querschnitten, sowie
- FIG.7, FIG.7a: vierte Ausführungsbeispiele der Befestigung des Förderbandes an einem Tragbalken, jeweils in Querschnitten.

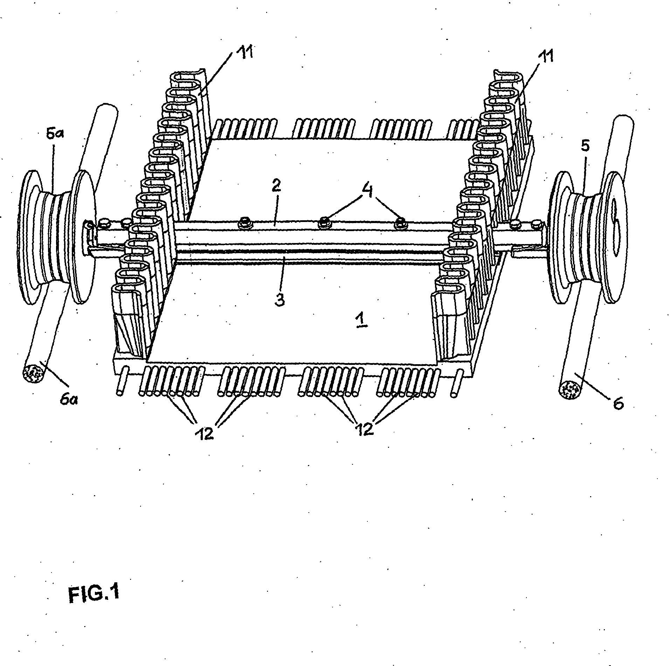

In FIG.1 ist ein Abschnitt des Förderbandes 1 in einer Förderanlage zum Transport von Gütern dargestellt. Wie daraus ersichtlich ist, ist das Förderband 1 an seinen beiden Seitenrändern mit Wellkanten 11 ausgebildet, durch welche es ermöglicht wird, dieses an den beiden Enden der Förderanlage über Umlenktrommeln zu führen. Wie daraus weiters ersichtlich ist, ist das Förderband 1 mit einer Vielzahl von dicht nebeneinander befindlichen Verstärkungsseilen 12 ausgebildet, aufgrund welcher dieses eine große Tragfähigkeit aufweist. Das Förderband 1 ist an der Unterseite von sich quer zu dessen Bewegungsrichtung erstreckenden Tragbalken 2 befestigt, wobei sich zwischen dem Förderband 1 und den Tragbalken 2 jeweils eine elastische Dichtungsleiste 3 befindet. Die Befestigung des Förderbandes 1 an den Tragbalken 2 erfolgt z.B. mittels das Förderband 1 und die Tragbalken 2 durchsetzender Schraubbolzen 4. Durch die zwischen dem Förderband 1 und den Tragbalken 2 befindlichen Dichtungsleisten 3 wird vermieden, dass sich zwischen dem Förderband 1 und den Tragbalken 2 jeweils Spalte ausbilden, in welche Fördergut eindringt, wodurch das Förderband 1 einem erhöhten Verschleiß unterliegt.

An den beiden Enden der Tragbalken 2 befinden sich Laufrollen 5 und 5a, welche längs eines Paares von Tragseilen 6 und 6a bzw. von Tragschienen geführt sind. Dabei sind sowohl dem mit Transportgut beladenen Trum des Förderbandes 1 als auch dem unbeladenen Trum des Förderbandes 1 jeweils ein Paar von Tragseilen 6 und 6a bzw. von Tragschienen zugeordnet, längs welcher das Förderband 1 zwischen den in den Endstationen befindlichen Umlenk- bzw. Antriebstrommeln im Umlauf bewegt wird.

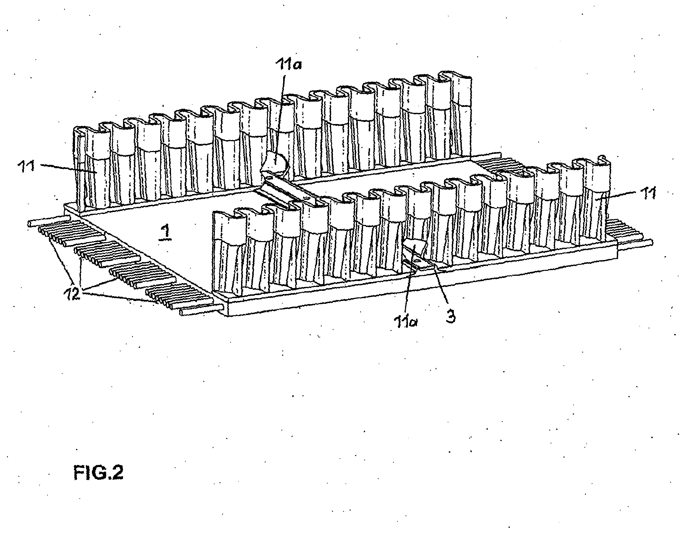

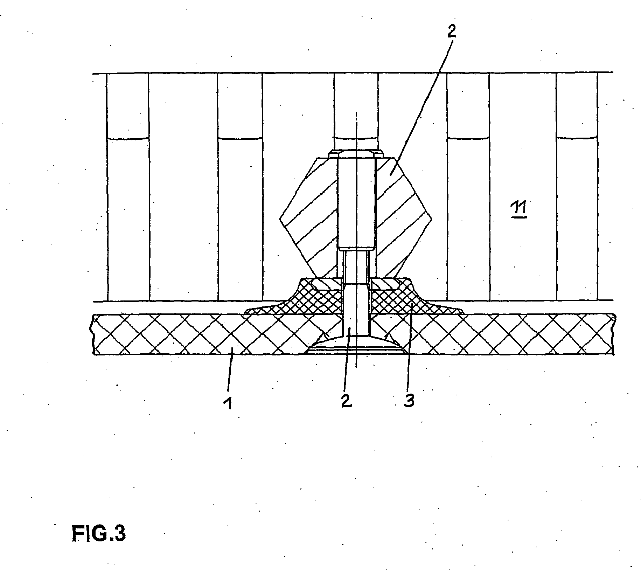

Aus den FIG.2 und FIG.3 ist ersichtlich, dass die seitlichen Wellkanten 11 mit Ausnehmungen 11a für die Tragbalken 2 ausgebildet sind und dass sich die Dichtungsleisten 3 an der Oberseite des Förderbandes 1 befinden.

Nachstehend ist erläutert, in welcher Weise das Förderband 1 an den Tragbalken 2 befestigt ist:

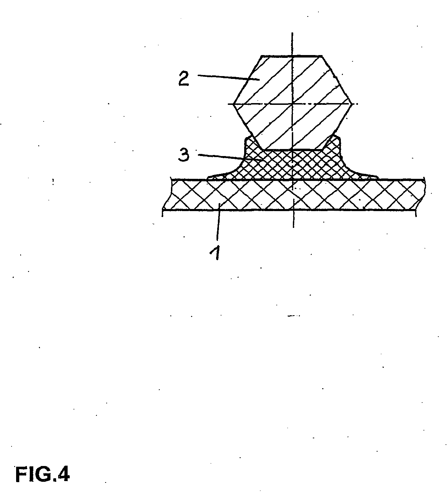

In FIG.4 ist ein erstes Ausführungsbeispiel dargestellt, bei welchem die sich zwischen den Tragbalken 2 und dem Förderband 1 befindlichen Dichtungsleisten 3 sowohl mit dem Förderband 1 als auch mit den Tragbalken 2 durch Klebung verbunden sind. Aufgrund der Elastizität der Dichtungsleisten 3 ist gewährleistet, dass sich zwischen dem Förderband 1 und den Tragbalken 2 keinerlei Spalte ausbilden können.

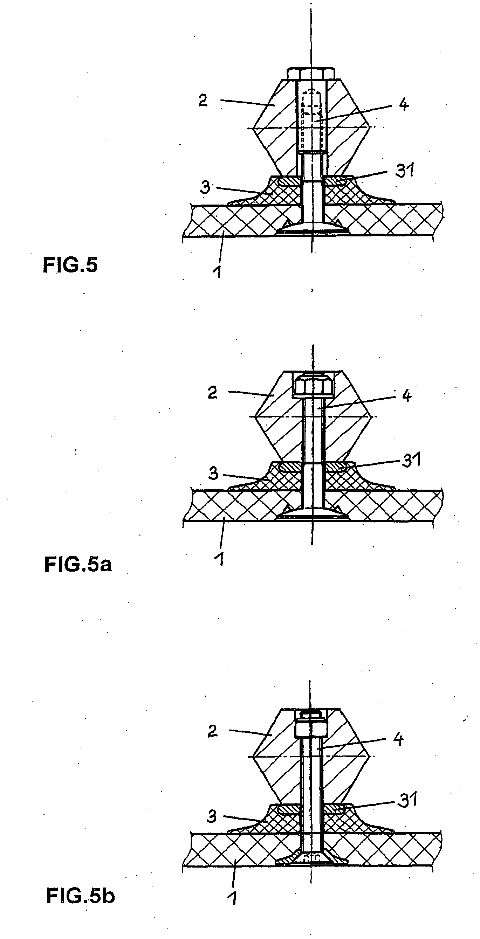

Beim Ausführungsbeispiel gemäß den FIG.5, FIG.5a und FIG.5b sind die Dichtungsleisten 3 mit dem Förderband 1 durch Klebung verbunden. Weiters sind die Dichtungsleisten 3 jeweils mit Verstärkungsleisten 31 ausgebildet, welche an die Tragbalken 2 anliegen und welche mit diesen nicht verklebt sind. Die Befestigung des Förderbandes 1 und der Dichtungsleisten 3 mit den Tragbalken 2 erfolgt mittels Schraubbolzen 4. Dabei befinden sich die Schraubbolzen 4 voneinander in solchen Abständen, wie diese aus FIG.1 ersichtlich sind.

Die Ausführungsbeispiele gemäß den FIG.5, FIG.5a und FIG.5b unterscheiden sich voneinander durch die unterschiedlichen Ausbildungen der Schraubbolzen 4, bei welchen berücksichtigt ist, dass durch das vom Förderband 1 transportierte Fördergut die oberen Enden der Schraubbolzen 4 einem starken Verschleiß unterliegen, weswegen solche konstruktive Gestaltungen gewählt werden müssen, durch welche gewährleistet ist, dass die Schraubbolzen 4 jederzeit wieder gelöst werden können, sobald dies für den Austausch von Tragbalken 2 erforderlich ist.
Auch bei dieser Art der Befestigung des Förderbandes 1 an den Tragbalken 2 unter Zwischenlage der Dichtungsleiste 3 wird die Ausbildung von Spalten zwischen dem Förderband 1 und den Tragbalken 2 vermieden. Aufgrund der Schraubverbindungen können die Tragbalken 2 in einfacher Weise vom Förderband 1 gelöst werden.

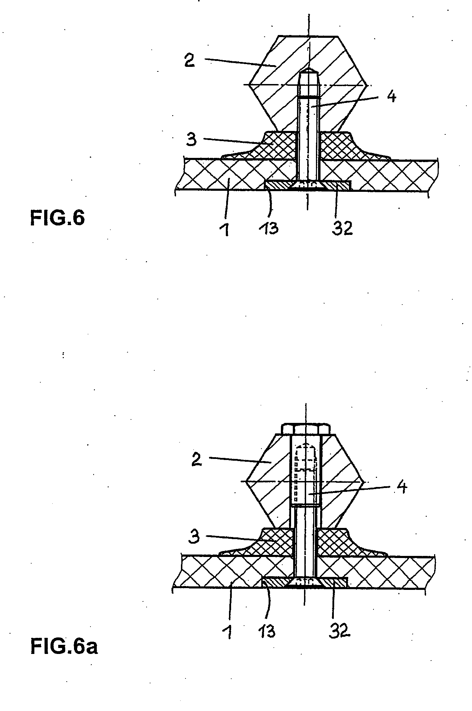

Das dritte Ausführungsbeispiel der Befestigung des Förderbandes 1 an den Tragbalken 2 gemäß den FIG.6 und FIG.6a unterscheidet sich vom Ausführungsbeispiel gemäß den FIG.5, FIG.5a und FIG.5b dadurch, dass an der Unterseite des Förderbandes 1 Nuten 13 vorgesehen sind, in welchen sich Verstärkungsleisten 32 befinden, durch welche mittels der Schraubbolzen 4, welche die Dichtungsleisten 3, das Förderband 1 und die Verstärkungsleisten 32 durchsetzen, das Förderband 1 unter Zwischenlage der Dichtungsleisten 3 an die Tragbalken 2 über die gesamte Breite des Förderbandes 1 angepresst wird, wodurch gleichfalls die Ausbildung von Spalten zwischen dem Förderband 1 und den Tragbalken 2 ausgeschlossen wird. Auch dabei sind die Dichtungsleisten 3 mit dem Förderband 1 verklebt. Zudem dabei sind die Schraubbolzen 4 so ausgebildet, dass diese jederzeit lösbar sind.

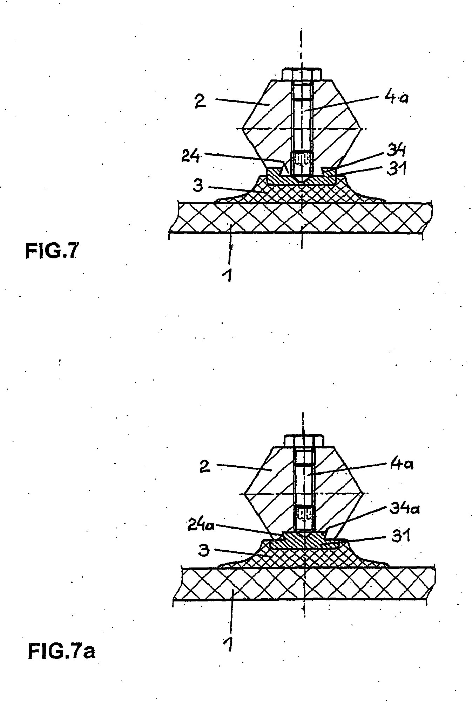

Beim vierten Ausführungsbeispiel gemäß den FIG.7 und FIG.7a ist das Förderband 1 mit den Dichtungsleisten 3 gleichfalls mittels Verklebung verbunden. Weiters befinden sich an der den Tragbalken 2 zugewandten Seite der Dichtungsleisten 3 obere Verstärkungsleisten 31, welche mit den Dichtungsleisten 3 durch Verklebung verbunden sind. Gemäß FIG.7 sind die oberen Verstärkungsleisten 31 jeweils mit einer hinterschnittenen Nut 34 ausgebildet, in welche von den Tragbalken 2 abragende hinterschnittene Federn 24 einragen, wodurch die Dichtungsleisten 3 und damit das Förderband 1 an den Tragbalken 2 befestigt sind.
Beim Ausführungsbeispiel gemäß FIG.7a sind die Verstärkungsleisten 31 mit einer hinterschnittenen Feder 34a ausgebildet und sind die Tragbalken 2 mit hinterschnittenen Nuten 24a ausgebildet.
Durch diese beiden Ausbildungen kann das Förderband 1 in einfacher Weise mit den Tragbalken 2 lösbar verbunden werden. Um die erforderliche Lagestabilität zu erzielen, sind die Tragbalken 2 von Schrauben 4a durchsetzt, welche in in den Verstärkungsleisten 31 vorgesehene Bohrungen einragen.

Die Tragbalken 2 sind im Querschnitt sechseckig ausgebildet. Weiters sind sie als Vollkörper, also nicht rohrförmig, ausgebildet sind, wodurch sie auch bei einem durch das Transportgut verursachten starken Verschleiß lange Betriebszeiten ermöglichen.

## Patentansprüche

1. Förderanlage zum Transport von Gütern mit einem Förderband (1), welches an den beiden Enden der Anlage über Umlenktrommeln geführt ist und welches an der Unterseite von quer zur Bewegungsrichtung des Förderbandes (1) ausgerichteten und in Bewegungsrichtung des Förderbandes (1) voneinander im Abstand befindlichen Tragbalken (2) befestigt ist, wobei an den beiden seitlichen Enden der Tragbalken jeweils Laufrollen (5, 5a) gelagert sind, welche auf zwei längs der Anlage vorgesehenen Paaren von Tragseilen (6,6a) bzw. Tragschienen, die dem vorlaufenden Trum und dem rücklaufenden Trum des Förderbandes (1) zugeordnet sind, abrollen, wobei zumindest bei einem Teil der Tragbalken (2) zwischen der Unterseite der Tragbalken (2) und der Oberseite des Förderbandes (1) eine aus einem elastischen Material bestehende Dichtungsleiste (3) vorgesehen ist und wobei das Förderband (1) mit den Tragbalken (2) mittels in diese eingesetzten Schraubbolzen (4) verbunden ist, **dadurch gekennzeichnet, dass** die Tragbalken (2) an ihrer dem Förderband (1) zugewandten Seite ebenflächig ausgebildet sind.

2. Förderanlage nach Patentanspruch 1, **dadurch gekennzeichnet, dass** die Tragbalken (2) im Querschnitt sechseckig ausgebildet sind.

3. Förderanlage nach Patentanspruch 1 und 2, **dadurch gekennzeichnet, dass** die Unterseite der Dichtungsleiste (3) mit der Oberseite des Förderbandes (1) durch Klebung verbunden ist.

4. Förderanlage nach einem der Patentansprüche 1 und 2, **dadurch gekennzeichnet, dass** die Dichtungsleiste (3) an ihrer den Tragbalken (2) zugewandten Seite mit einer mit dieser durch Klebung verbundenen Verstärkungsleiste (31) ausgebildet ist und dass die Verstärkungsleiste (31) an ihrer den Tragbalken (2) zugewandten Seite gleichfalls ebenflächig ausgebildet ist.

5. Förderanlage nach einem der Patentansprüche 1 bis 3, **dadurch gekennzeichnet, dass** die Tragbalken (2) an ihrer dem Förderband (1) abgewandten Seite mit Ausnehmungen ausgebildet sind, in welche die den Schraubbolzen (4) zugeordneten Muttern gegenüber der Oberfläche der Tragbalken (2) versenkt eingesetzt sind.

6. Förderanlage nach einem der Patentansprüche 1 bis 3, **dadurch gekennzeichnet, dass** in die Tragbalken (2) von der dem Förderband (1) abgewandten Seite her Hutmuttern eingesetzt sind.
